# EUROPEAN PATENT SPECIFICATION

(11) **EP 0 487 184 B1**
(45) Date of publication and mention of the grant of the patent: **11.06.1997**
(21) Application number: 91306616.3
(22) Date of filing: 19.07.1991
(51) Int. Cl.: H04N 9/89

(54) **Circuit for recording and reproducing time base error corrector reference signal**
Schaltung zum Aufzeichnen und Wiedergeben eines Referenzsignals für einen Zeitbasiskorrektor
Circuit pour l'enregistrement et la reproduction d'un signal de référence pour un correcteur de base de temps

(30) Priority: 19.11.1990 KR 1873690
(43) Date of publication of application: 27.05.1992
(73) Proprietor: SAMSUNG ELECTRONICS CO. LTD., Suwon, Kyunggi-do (KR)
(72) Inventor: Ko, Jeong-Wan, Jangan-ku Suwon, Kyunggi-do (KR)
(74) Representative: Stanley, David William

(56) References cited:
- EP-A- 0 265 085
- EP-A- 0 475 750
- DE-A- 3 909 847
- US-A- 4 672 470
- US-A- 4 688 081
- INTERNATIONAL BROADCASTING CONVENTION September 1988, BRIGHTON, GB pages 414 - 417 SCHIFFLER ET AL 'AN HDTV VTR: ANALOG RECORDING WITH DIGITAL SIGNAL PROCESSING'
- IEEE TRANSACTIONS ON CONSUMER ELECTRONICS vol. CE-32, no. 3, May 1986, NEW YORK US pages 107 - 114 FURUHATA ET AL 'A HIGH-DEFINITION MUSE VCR WITH ANALOG SEGMENT RECORDING METHOD'

## Description

The present invention relates to a time base error corrector (TBC) for correcting timing discordance of video signals in video signal recording/reproducing systems, and more particularly to a circuit for recording and reproducing a reference signal used for correcting timing discordance of video signals.

Generally, a video signal includes video information arranged in accordance with a synchronizing signal so as to display accurate images on display devices, and is affected by noise during recording and reproducing through a recording medium as are any other information signals, thereby producing time base errors in the video information. Time base errors occur mainly due to mechanical elements included in the recording/reproducing apparatus, which can tire viewers due to trembling of an image caused by the temporal lengthening or shortening of the signal.

Especially when an analogue video signal is converted to a digital video signal for digitally processing the analogue video signal, a variation in the sampling number may occur due to the time base error, though the number of samples for each synchronization is required to be constant. As a result, video information designated for each pixel may move to the left or to the right by several pixels, so that the phase of the signal is not fixed and furthermore, signal processing between frames becomes impossible due to the changing pixel positions.

A time base error corrector (hereinafter referred to as a TBC) is an apparatus that corrects the timing discordance of video information due to time base error of the video signal, and which is employed to remove the time base errors created during recording and reproducing and to resynchronize the signal more precisely in video recording and reproducing systems.

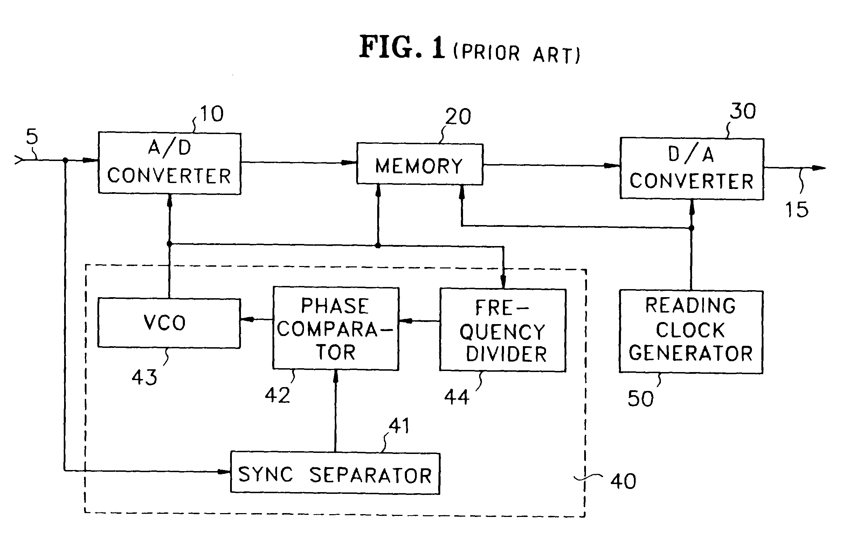

A conventional TBC used in video recording and reproducing systems will be described below, referring to Figure 1 of the accompanying diagrammatic drawings.

In Figure 1, analog to digital converter (A/D converter) 10 samples by a certain period and encodes a video signal entering through input line 5, thereby generating a digital video signal. Memory 20 temporarily stores the digital video signal converted in the A/D converter 10. Digital to analog converter (D/A converter) 30 converts the digital video signal read-out from the memory 20 to an analog video signal and outputs it through output line 15. To maintain uniformly the set number of samplings of A/D converter 10 and the number data stored in memory 20 for every horizontal synchronization, storing clock generator 40 generates storing clocks having different periods according to the period variation of a horizontal synchronizing signal of a video signal supplied through input line 5 and supplies the storing clocks to A/D converter 10 and memory 20. Reading clock generator 50 generates a reading clock having a certain period and supplies the clock to memory 20 and D/A converter 30. In the storing clock generator 40 for generating storing clocks, synchronizing signal separator 41 separates a horizontal synchronizing signal from a video signal supplied through input line 5 and phase comparator 42 compares the phase of the frequency-divided storing clock applied from frequency divider 44 with that of the horizontal synchronizing signal supplied from the synchronizing signal separator 41 and generates a control voltage corresponding to the phase difference. Voltage controlled oscillator 43 (hereinafter referred to as VCO) generates storing clocks having different frequencies depending on the control voltages applied from the phase comparator 42 and supplies the clocks to A/D converter 10, memory 20 and frequency divider 44. The frequency divider 44 frequency-divides the storing clocks in order that the clocks have the same frequency as that of the horizontal synchronizing signal and supplies the clocks to phase comparator 42.

Finally, the conventional TBC shown in Figure 1 samples a video signal by a certain number of samplings for each horizontal synchronizing period by regulating (adding/subtracting) the frequency of the storing clock according to the period variation of the horizontal synchronizing signal and stores the video signal into the memory. Then, such video data stored in the memory is read-out by the reading clock of a certain frequency and is converted to an analog video signal to correct the timing discordance of the video information of the video signals. However, in the case of the circuit shown in Figure 1, a negative feedback circuit is provided between the phase comparator 42 and the VCO in order to regulate (add/subtract) the frequency of the storing clock for every horizontal synchronizing signal period. The time constant of the negative feedback circuit usually has a time period which is at least greater than the horizontal synchronizing signal period and usually of two or three times the horizontal synchronizing signal period. When the frequency transfer characteristic of a recording system is very narrow as compared with the band of an original signal, rise time and fall time of the horizontal synchronizing signal lengthens to make it difficult to locate a precise synchronizing position. Furthermore, due to the influence of noise and the like, the frequency of the storing clock cannot be changed precisely according to the variation of the horizontal synchronizing signal period. For these reasons, time base correction of a video signal can not be carried out precisely.

U.S. Patent number 4672470 discloses a recording and reproducing apparatus for recording a video signal comprising a horizontal sync signal multiplexed with at least one other video signal into a serial mixed signal, wherein a pilot signal of single frequency is superimposed in the horizontal blanking period of at least one video signal, and a clock is generated by use of the pilot signal of the mixed signal at the time of reproduction to eliminate time-axis variations appearing through recording and reproduction.

The object underlying the present invention is to further prevent the appearance of the effects on the video signal to be recorded and reproduced of higher harmonics and reflected waves by the noise included in the blanking interval and synchronizing period of the modulated luminance signal in which the TBC reference signal is to be inserted and by the insertion of the reference signal.

According to one aspect of the present invention, there is provided a circuit for recording a color video signal comprising:
means for modulating the luminance and chrominance components of said color video signal so as to be recorded on a recording medium;
means for separating horizontal synchronizing signal from said luminance signal of said color video signal;
means for generating a TBC reference signal in the form of clock pulses having a period varying according to the period variation of the horizontal synchronizing signal of said color video signal;
means for adding said TBC reference signal to a modulated video signal component from said color video signal modulating means;
means for recording said modulated video signal to which a TBC reference signal is added by said reference signal adding means, on a recording medium;
wherein said reference signal adding means comprises a mixer for mixing said modulated video signal and said TBC reference signal;
said reference signal adding means further comprising adding time control means for enabling said TBC reference signal to be added during a blanking interval of said modulated video signal; and
characterised in that said reference signal adding means further comprises a standard frequency modulated signal generating means for generating first and second standard frequency modulated signals from the synchronizing signal output from said separating means by frequency modulating a detected horizontal synchronizing signal by a first carrier signal and a detected blanking interval pulse by a second carrier signal respectively for use as standard frequencies in said blanking interval in order that said frequency modulated signals can be inserted together with said TBC reference signal within said blanking interval of said modulated video signal to prevent time base disturbances.

Preferably said TBC reference signal is distributed in a frequency bandwidth higher than that of said first and second standard frequency modulated signals and said chrominance signal in said blanking interval of said modulated video signal.

Preferably the circuit further comprises :
a circuit for reproducing a TBC reference signal, wherein said circuit for reproducing a TBC reference signal comprises :
means for reading out video information in which a TBC reference signal is inserted, from said recording medium;
means for demodulating said read-out video information to generate a video signal;
means for separating a TBC reference signal from said read-out video signal;
means for restoring said separated TBC reference signal by outputting a signal the frequency of which is according to the frequency of said TBC reference signal to supply said restored TBC reference signal in a clock-pulse shape to a TBC circuit for correcting time base errors of said demodulated video signal by said restored TBC reference signal.

Preferably said signal extracting means comprises a band-pass filter.

The invention extends to a video signal recording and/or reproducing apparatus provided with a circuit as above in accordance with any of the above aspects of the invention.

Advantages of the present invention will be more apparent from the following description of preferred embodiments of the present invention, by way of example only, with reference to Figures 2 to 4 of the attached drawings, in which:
Figure 2 is a block diagram of one example of a circuit for recording a reference signal for correcting time base error, according to one embodiment of the present invention;
Figures 3A and 3B illustrate the frequency characteristics of a video signal processed by the circuit shown in Figure 2; and
Figure 4 is a block circuit diagram of one example of an embodiment of the present invention for reproducing a reference signal for correcting time base error.

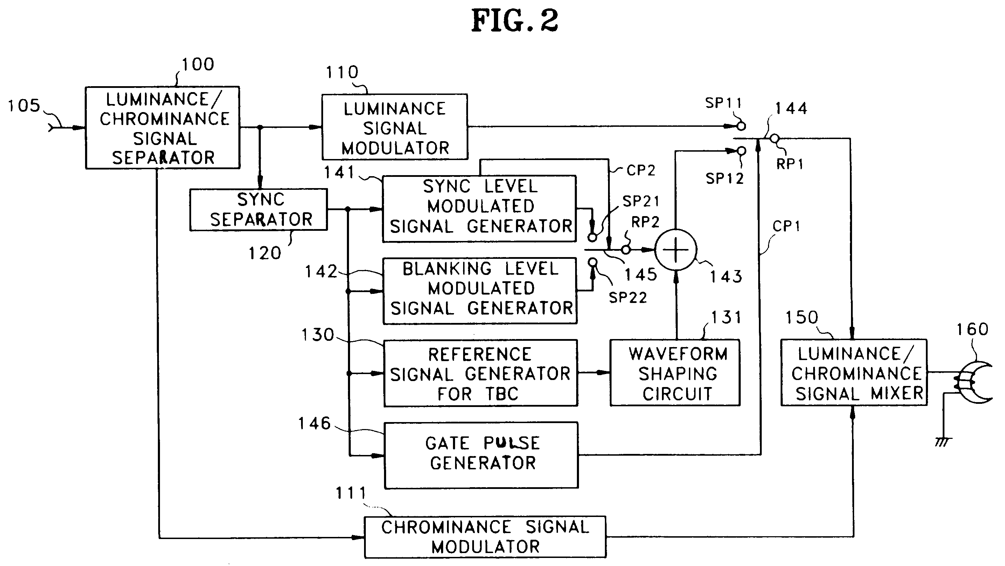

Referring to Figure 2 wherein an embodiment of a circuit for recording a reference signal for correcting a time base error according to the present invention is shown, input line 105 is connected to an external video signal source (not shown) and to the input terminal of luminance/chrominance signal separator 100. A first output terminal of the luminance/chrominance signal separator 100 is connected to input terminals of synchronizing signal separator 120 and luminance signal modulator 110. A second output terminal of the luminance/chrominance signal separator 100 is connected to an input terminal of chrominance signal modulator 111. An output terminal of the luminance signal modulator 110 is connected to a first selection point SP11 of a first controlling switch 144. The reference connection point RP1 of the first controlling switch 144 is connected to a first input terminal of luminance/chrominance signal mixer 150. An output terminal of chrominance signal modulator 111 is connected to a second input terminal of luminance/chrominance signal mixer 150. An output terminal of luminance/chrominance signal mixer 150 is connected to magnetic head 160. An output terminal of synchronizing signal separator 120 is connected to input terminals of TBC reference signal generator 130, synchronizing level modulated signal generator 141, blanking level modulated signal generator 142 and gate pulse generator 146. An output terminal of TBC reference signal generator 130 is connected to an input terminal of waveform shaping circuit 131. An output terminal of the waveform shaping circuit 131 is connected to a first input terminal of reference signal mixer 143. A first output terminal of synchronizing level modulated signal generator 141 is connected to a first selection point SP21 of a second controlling switch 145. A second output terminal of synchronizing level modulated signal generator 141 is connected to control port CP2 of the second controlling switch 145. An output terminal of blanking level modulated signal generator 142 is connected to a second selection point SP22 of the second controlling switch 145. An output terminal RP2 of the second controlling switch 145 is connected to a second input terminal of reference signal mixer 143. An output terminal of the reference signal mixer 143 is connected to a second selection point SP12 of the first controlling switch 144. An output terminal of gate pulse generator 146 is connected to control port CP1 of the first controlling switch 144.

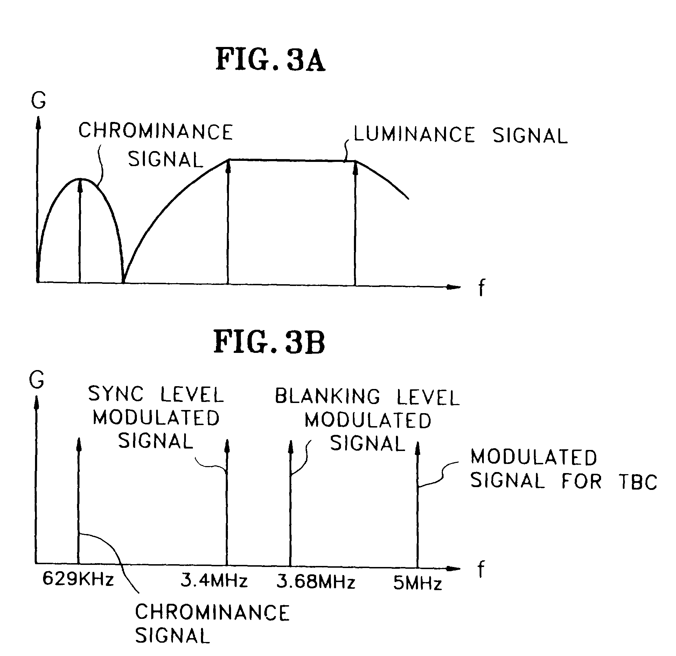

Figures 3A and 3B show characteristics of the output frequency of the luminance/chrominance mixer 150 in the circuit shown in Figure 2, wherein Figure 3A is for frequency characteristics of the video signal in a horizontal scanning period and Figure 3B is for frequency characteristics of the video signal in a horizontal blanking interval.

In Figure 2, luminance/chrominance signal separator 100 separates video signals input through the input line 105 into a luminance signal and a chrominance signal and supplies the luminance signal to the input terminals of luminance signal modulator 110 and synchronizing signal separator 120 through the first output terminal and supplies the chrominance signal to the input terminal of chrominance signal modulator 111 through the second output terminal.

In luminance signal modulator 110, the amplitude of the luminance signal is frequency-modulated by a carrier signal so as to be recorded on a recording medium and the modulated luminance signal distributed in the same manner as the luminance signal of Figure 3A is supplied to the first selection point SP11 of the first controlling switch 144.

In chrominance signal modulator 111, the amplitude of a chrominance signal is amplitude modulated to be distributed in the frequency band of from 0 to 1.2 MHz in the same manner as the chrominance signal of Figure 3A and the low frequency converted chrominance signal is supplied to the second input terminal of luminance/chrominance signal mixer 150.

Synchronizing signal separator 120 separates a horizontal synchronizing signal from the luminance signal to supply to the input terminals of the synchronizing level modulated signal generator 141, the blanking level modulated signal generator 142, the TBC reference signal generator 130 and the gate pulse generator 146.

Reference signal generator 130 consists of a voltage controlled oscillator 43, a phase comparator 42 and a frequency divider 44 of a storing clock generator 40 as shown in Figure 1, detects the period variation of the horizontal synchronizing signal input from the synchronizing signal separator 120, and generates a TBC reference signal in the form of a clock pulse having a period varying in response to the period variation of the detected horizontal synchronizing signal.

Waveform shaping circuit 131 filters the TBC reference signal in clock pulse form and generates a TBC reference signal waveform to a sine wave.

Synchronizing level modulated signal generator 141 detects a synchronizing pulse from the horizontal synchronizing signals, applies a logic signal of a certain logic state (high or low logic state) to the control port CP2 of the second controlling switch 145 during detection of the synchronizing pulse, and supplies a synchronizing level modulated signal which is generated by frequency-modulating the detected synchronizing pulse by a carrier signal, to the first selection point SP21 of the second controlling switch 145. The synchronizing level modulated signal generator 141 can be composed of a level detector, an oscillator and a mixer to operate as described above, which are not shown in the drawing.

Blanking level modulated signal generator 142 detects a blanking pulse from the horizontal synchronizing signals and supplies the blanking level modulated signal which is generated by frequency-modulating the detected blanking pulse level by a carrier signal, to the second selection point SP22 of the second controlling switch 145. In order for the operation to take place, the blanking level modulated signal generator 142 can be composed of a level detector, an oscillator and a mixer.

The second controlling switch 145 operates when a logic signal is applied to the control port CP2 from the second output terminal of the synchronizing level modulated signal generator 141, and selects the output of the synchronizing level modulated signal generator 141, connected to the first selection point SP21 and supplies the result to the second input terminal of the reference signal mixer 143 during the synchronizing pulse duration of the horizontal synchronizing signal. On the other hand, the second controlling switch 145 selects the output of the blanking level modulated signal generator 142 connected to the second selection point SP22 and supplies the result to the second input terminal of the reference signal mixer 143 during the intervals other than the synchronizing pulse period duration of the horizontal synchronizing signal.

The reference signal mixer 143 mixes the waveform-shaped TBC reference signal supplied from the waveform shaping circuit 131 with the modulated signals supplied from the reference connection point RP2 of the second controlling switch 145 and supplies the mixed signals- to the second selection connection point SP12 of the first controlling switch 144.

The frequencies of the signals are divided in the waveform shaping circuit 131 and are waveform to a sine waveform in order that the synchronizing level modulated signal is distributed around the zone of 3.4MHz, the blanking level modulated signal is distributed around the zone of 3.68MHz, and the TBC reference signal is distributed around the zone of 5MHz as shown in Figure 3B. The reason why the TBC reference signal is supplied to the first controlling switch 144 after being mixed with the blanking level modulated signal and synchronizing level modulated signal, is to prevent the appearance of the effects of higher harmonics and reflected waves on the output video signal by the noise included in the blanking interval and synchronizing period of the modulated luminance signal in which the TBC reference signal is to be inserted and by the insertion of the reference signal.

In order to determine a region among the luminance signals in which the TBC reference signal is to be inserted, gate pulse generator 146 detects a synchronizing pulse or blanking pulse from the horizontal synchronizing signals, delays the detected synchronizing pulse or blanking pulse by a certain period (for instance, 55^{µS}) shorter than the period of the horizontal synchronizing signal, generates a gate pulse having a width sufficient to cover the blanking interval of the horizontal synchronizing signal by the delayed pulse and supplies the gate pulse to the control port CP1 of the first controlling switch 144.

The first controlling switch 144 selects the output of the reference signal mixer 143 supplied to the second selection point SP12 while the gate pulse is applied from the gate pulse generator 146 to the control port CP1 and supplies the result to the first input terminal of the luminance/chrominance signal mixer 150. On the other hand, during the time that the gate pulse is not applied to the control port CP1, the first controlling switch 144 selects the output of the luminance signal modulator 110 supplied to the first selection point SP11 and supplies the selected output to the luminance/chrominance signal mixer 150.

Luminance/chrominance signal mixer 150 mixes the modulated luminance signal, in which the TBC reference signal is inserted, supplied from the reference connection point RP1 of the first controlling switch 144 with the low frequency converted chrominance signal supplied from the chrominance signal modulator 111 and records the mixed signals on a recording medium through magnetic head 160. The video signal mixed in the luminance/chrominance mixer 150 has such frequency characteristics as shown in Figure 3A during a horizontal scanning period, and has such frequency characteristics as shown in Figure 3B during a blanking interval.

When the synchronizing signals of the video signal are changed by the effect of a time base error, the TBC reference signal recorded with the video signal is changed by the same amount of change as that occurring in the synchronizing signals. Accordingly, the video information of the video signal is time base corrected during reproducing by the changed TBC reference signal, thereby performing the correction precisely.

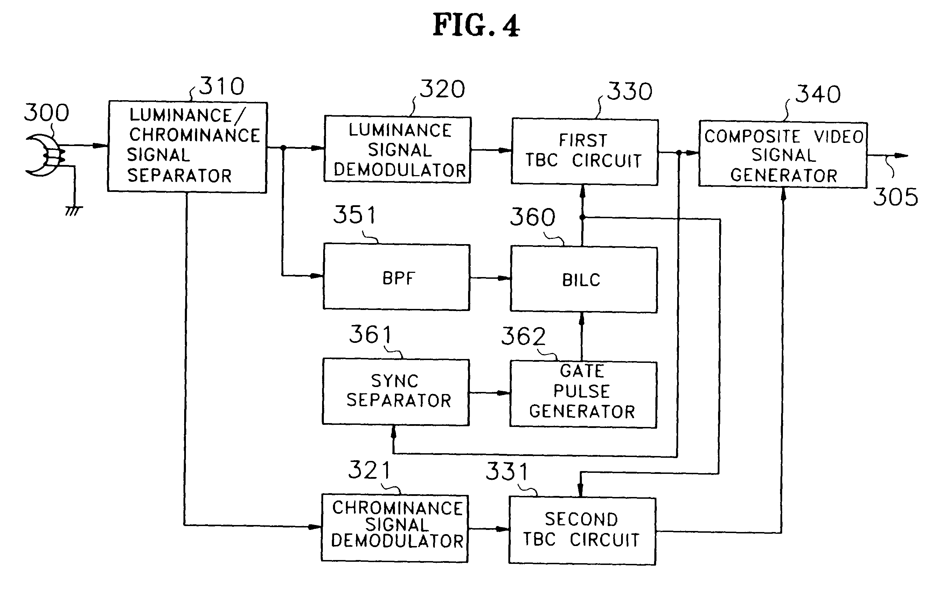

Figure 4 is a block diagram of an embodiment of a circuit for reproducing a TBC reference signal according to the present invention. In Figure 4, magnetic head 300 is connected to the input terminal of luminance/chrominance signal separator 310. A first input terminal of the luminance/chrominance signal separator 310 is connected to input terminals of luminance signal demodulator 320 and band pass filter 351 and a second input terminal of the separator 310 is connected to an input terminal of chrominance signal demodulator 321. An output terminal of the luminance signal demodulator 320 is connected to an input terminal of a first TBC circuit 330. An output terminal of the first TBC circuit 330 is connected to an input terminal of synchronizing signal separator 361 and to a first input terminal of composite video signal generator 340. An output terminal of the band pass filter 351 is connected to an input terminal of burst injection locking circuit 360 (hereinafter referred to as BILC). An output terminal of BILC 360 is connected to control terminal of the first TBC circuit 330 and a second TBC circuit 331. An output terminal of synchronizing signal separator 361 is connected to an input terminal of gate pulse generator 362. The gate pulse generator 362 is connected to a control terminal of BILC 360. An output terminal of chrominance signal demodulator 321 is connected to an input terminal of the second TBC circuit 331. An output terminal of the second TBC circuit 331 is connected to a second input terminal of composite video signal generator 340.

An output line terminal 305 of the composite video signal generator 340 is connected to an external display device or other video recording systems (not shown).

In operation, magnetic head 300 reads out video information from a recording medium and supplies the information to luminance/chrominance signal separator 310.

Luminance/chrominance signal separator 310 separates the video information supplied from the magnetic head 300 into a luminance signal mixed with a TBC reference signal and a chrominance signal.

Luminance signal demodulator 320 frequency-demodulates the luminance signal mixed with the TBC reference signal and supplies the demodulated luminance signal to the first TBC circuit 330.

Band pass filter 351 detects the TBC reference signal by band-pass filtering the luminance signal mixed with the TBC reference signal.

When a gate pulse is applied to the control terminals, BILC 360 receives the TBC reference signal detected in the band pass filter 351 and regulates an output frequency according to the frequency of the input TBC reference signal. Then, the BILC 360 generates a clock pulse-shaped TBC reference signal having a regulated output frequency and supplies the generated signal to the control terminals of the first and second TBC circuits 330 and 331.

The first TBC circuit 330 corrects the time base error of the demodulated luminance signal input from the luminance signal demodulator 320 by the TBC reference signal input from the BILC 360 and generates the corrected luminance signal. Synchronizing signal separator 361 separates a horizontal synchronizing signal from the corrected luminance signal and supplies the synchronizing signal to gate pulse generator 362.

Gate pulse generator 362, which includes a delay device and a monostable multi-vibrator therein, delays a synchronizing pulse of a horizontal synchronizing signal until the next synchronizing pulse occurs by the delay device and generates, in the monostable multi-vibrator, a gate pulse having a width sufficient to cover the blanking interval of the horizontal synchronizing signal by the synchronizing pulse of the delayed horizontal synchronizing signal. The gate pulse is supplied to the control terminal of the BILC 360 to control the regulation of the output frequency of the BILC 360 during the blanking interval of the horizontal synchronizing signal.

Chrominance signal demodulator 321 generates the demodulated chrominance signal by amplitude-demodulating the extracted chrominance signal.

The second TBC circuit 331 corrects the time base error of the demodulated chrominance signal by the TBC reference signal to generate the corrected chrominance signal.

Composite video signal generator 340 mixes the corrected luminance signal and the corrected chrominance signal to generate a composite video signal and supplies it to a display apparatus or other image recording systems through the output line 305.

The embodiments of the present invention that are described in detail above are advantageous in that, in systems for recording and reproducing a video signal, timing discordance of a video signal by a time base error during recording and reproducing operations can be adaptively corrected as the variation of synchronizing signals of a video signal occur by the TBC reference signal recorded together with the video signal.

## Claims

1. A circuit for recording a color video signal comprising:
means (110,111) for modulating the luminance and chrominance components of said color video signal so as to be recorded on a recording medium;
means (120) for separating a horizontal synchronizing signal from said luminance signal of said color video signal;
means (130) for generating a TBC reference signal in the form of clock pulses having a period varying according to the period variation of the horizontal synchronizing signal of said color video signal;
means (144,143) for adding said TBC reference signal to a modulated video signal component from said color video signal modulating means (110, 111);
means (160) for recording said modulated video signal to which a TBC reference signal is added by said reference signal adding means, on a recording medium;
wherein said reference signal adding means comprises a mixer (143) for mixing said modulated video signal and said TBC reference signal;
said reference signal adding means further comprising adding time control means (146) for enabling said TBC reference signal to be added during a blanking interval of said modulated video signal; and
characterised in that said reference signal adding means further comprises a standard frequency modulated signal generating means (141,142) for generating first and second standard frequency modulated signals from the synchronizing signal output from said separating means by frequency modulating a detected horizontal synchronizing signal by a first carrier signal and a detected blanking interval pulse by a second carrier signal respectively for use as standard frequencies in said blanking interval in order that said frequency modulated signals can be inserted together with said TBC reference signal within said blanking interval of said modulated video signal to prevent time base disturbances.

2. A circuit as claimed in claim 1, wherein said TBC reference signal is distributed in a frequency bandwidth higher than that of said first and second standard frequency modulated signals and said chrominance signal in said blanking interval of said modulated video signal.

3. A circuit as claimed in Claim 1 or Claim 2, the circuit further comprising :
a circuit for reproducing a TBC reference signal, wherein said circuit for reproducing a TBC reference signal comprises :
means (300) for reading out video information in which a TBC reference signal is inserted, from said recording medium;
means (320,321) for demodulating said read-out video information to generate a video signal;
means (351) for separating a TBC reference signal from said read-out video signal;
means (360) for restoring said separated TBC reference signal by outputting a signal the frequency of which is according to the frequency of said TBC reference signal to supply said restored TBC reference signal in a clock-pulse shape to a TBC circuit (330,331) for correcting time base errors of said demodulated video signal by said restored TBC reference signal.

4. A circuit as claimed in claim 3, wherein said reference signal extracting means comprises a band-pass filter (351).

5. A video signal recording and/or reproducing apparatus provided with a circuit according to any of the preceding claims.

## Patentansprüche

1. Eine Schaltung zum Aufzeichnen eines Farbvideosignals, umfassend:
eine Einrichtung (110, 111) zum Modulieren der Helligkeits- und Chrominanzkomponente des genannten Farbvideosignals, um auf einem Aufzeichnungsmedium aufgezeichnet zu werden;
eine Einrichtung (120) zum Trennen eines horizontalen Synchronsignals von dem genannten Helligkeitssignal des genannten Farbvideosignals;
einer Einrichtung (130) zum Erzeugen eines TBC Bezugssignals in der Form von Taktimpulsen, die eine Periode haben, die sich gemäß der Periodenänderung des horizontalen Synchronsignals des genannten Farbvideosignals ändert;
eine Einrichtung (144, 143) zum Addieren des genannten TBC Bezugssignals zu einer modulierten Videosignalkomponente von der genannten Einrichtung (110, 111) zum Modulieren des Farbvideosignals;
eine Einrichtung (160) zum Aufzeichnen des genannten modulierten Videosignals, zu dem ein TBC Bezugssignal durch die genannte Bezugssignaladdiereinrichtung hinzuaddiert worden ist, auf einem Aufzeichnungsmedium;
worin die genannte Bezugssignaladdiereinrichtung einen Mischer (143) zum Mischen des genannten modulierten Videosignals und des genannten TBC Bezugssignals umfaßt;
die genannte Bezugssignaladdiereinrichtung des weiteren eine Addierzeitsteuereinrichtung (146) umfaßt, damit das genannte TBC Bezugssignal während eines Austastintervalls des genannten modulierten Videosignals hinzuaddiert werden kann; und
**dadurch gekennzeichnet,** daß die genannte Bezugssignaladdiereinrichtung des weiteren eine Erzeugungseinrichtung (141, 142) für ein mit einer Standardfrequenz moduliertes Signal zum Erzeugen eines ersten und eines zweiten mit einer Standardfrequenz modulierten Signals von dem Synchronsignalausgang von der genannten Trenneinrichtung umfaßt, indem ein erfaßtes horizontales Synchronsignal mit einem ersten Trägersignal und ein erfaßter Austastintervallimpuls mit einem zweiten Trägersignal jeweils zur Verwendung als Standardfrequenzen in dem genannten Austastintervall moduliert wird, damit die genannten frequenzmodulierten Signale zusammen mit dem TBC Bezugssignal innerhalb des genannten Austastintervalls des genannten modulierten Videosignals eingeführt werden können, um Zeitbasisstörungen zu verhindern.

2. Eine Schaltung, wie in Anspruch 1 beansprucht, worin das genannte TBC Bezugssignal in einer Frequenzbandbreite verteilt ist, die größer als die der genannten ersten und zweiten standardfrequenzmodulierten Signale und des genannten Chrominanzsignals in dem genannten Austastintervalls des genannten modulierten Videosignals ist.

3. Eine Schaltung, wie in Anspruch 1 oder 2 beansprucht, wobei die Schaltung ferner umfaßt:
eine Schaltung zum Wiedergeben eines TBC Bezugssignals, worin die genannte Schaltung zum Wiedergeben eines TBC Bezugssignals umfaßt:
eine Einrichtung (300) zum Auslesen von Videoinformationen von dem genannten Aufzeichnungsmedium, in denen ein TBC Bezugssignal eingefügt ist;
eine Einrichtung (320, 321) zum Demodulieren der genannten ausgelesenen Videoinformaitonen, um ein Videosignal zu erzeugen;
eine Einrichtung (351) zum Trennen eines TBC Bezugssignals von dem genannten ausgelesenen Videosignal;
eine Einrichtung (360) zum Wiederherstellen des genannten getrennten TBC Bezugssignals, indem ein Signal ausgegeben wird, dessen Frequenz gemäß der Frequenz des genannten TBC Bezugssignals ist, um das genannte wiederhergestellte TBC Bezugssignal in einer Taktimpulsform einer TBC Schaltung (330, 331) zum Korrigieren von Zeitbasisfehlern des genannten demodulierten Videosignals durch das genannte wiederhergestellte TBC Bezugssignal zuzuführen.

4. Eine Schaltung, wie in Anspruch 3 beansprucht, worin die Gewinnungseinrichtung für das Bezugssignal ein Bandpaßfilter (351) umfaßt.

5. Eine Vidosignal-Aufzeichnungs- und/oder Wiedergabevorrichtung, die mit einer Schaltung gemäß irgendeinem der vorhergehenden Ansprüche versehen ist.

## Revendications

1. Circuit pour enregistrer un signal vidéo couleur, comprenant :
des moyens (110, 111) destinés à moduler les composantes de luminance et de chrominance dudit signal vidéo couleur afin que celui-ci soit enregistré sur un support d'enregistrement;
des moyens (120) destinés à séparer un signal de synchronisation horizontale dudit signal de luminance dudit signal vidéo couleur;
des moyens (130) destinés à générer un signal de référence TBC sous la forme d'impulsions d'horloge ayant une période variable en fonction de la variation de la période du signal de synchronisation horizontale dudit signal vidéo couleur;
des moyens (144, 143) destinés à ajouter ledit signal de référence TBC à une composante du signal vidéo modulé provenant desdits moyens de modulation de signal vidéo couleur (110, 111);
des moyens (160) destinés à enregistrer sur un support d'enregistrement ledit signal vidéo modulé auquel un signal de référence TBC est ajouté par lesdits moyens d'addition de signal de référence;
lesdits moyens d'addition de signal de référence comprenant un mélangeur (143) destiné à mélanger ledit signal vidéo modulé et ledit signal de référence TBC; et
lesdits moyens d'addition de signal de référence comprenant également des moyens de contrôle de temps d'addition (146) pour que ledit signal de référence TBC puisse être ajouté au cours d'un intervalle de suppression dudit signal vidéo modulé; et
caractérisé en ce que lesdits moyens d'addition de signal de référence comprennent, en outre, des moyens générateurs de signaux modulés en fréquence standard (141, 142) destinés à générer des premier et second signaux modulés en fréquence standard à partir du signal de synchronisation délivré en sortie par lesdits moyens de séparation, en modulant respectivement la fréquence d'un signal de synchronisation horizontale détecté, à l'aide d'un premier signal de porteuse, et une impulsion d'intervalle de suppression détectée, à l'aide d'un second signal de porteuse, pour qu'elles servent de fréquences standards pendant ledit intervalle de suppression afin que lesdits signaux à fréquence modulée puissent être insérés en même temps que ledit signal de référence TBC dans ledit intervalle de suppression dudit signal vidéo modulé pour éviter des perturbations de base de temps.

2. Circuit tel que défini dans la revendication 1, dans lequel ledit signal de référence TBC est réparti dans une largeur de bande de fréquences supérieure à celle desdits premier et second signaux modulés en fréquence standard et dudit signal de chrominance dans ledit intervalle de suppression dudit signal vidéo modulé.

3. Circuit tel que défini dans la revendication 1 ou la revendication 2, le circuit comprenant en outre :
un circuit servant à reproduire un signal de référence TBC, circuit pour reproduire un signal de référence TBC qui comprend :
des moyens (300) destinés à lire à partir dudit support d'enregistrement des informations vidéo dans lesquelles un signal de référence TBC est inséré;
des moyens (320, 321) destinés à démoduler lesdites informations vidéo lues pour générer un signal vidéo;
des moyens (351) destinés à séparer un signal de référence TBC dudit signal vidéo lu;
des moyens (360) destinés à rétablir ledit signal de référence TBC séparé en délivrant en sortie un signal dont la fréquence est fonction de la fréquence dudit signal de référence TBC, afin de fournir ledit signal de référence TBC rétabli sous la forme d'une impulsion d'horloge à un circuit TBC (330, 331) pour corriger des erreurs de base de temps dudit signal vidéo démodulé, à l'aide dudit signal de référence TBC rétabli.

4. Circuit tel que défini dans la revendication 3, dans lequel lesdits moyens d'extraction de signal de référence comprennent un filtre passe-bande (351).

5. Appareil d'enregistrement et/ou de reproduction de signaux vidéo équipé d'un circuit selon l'une quelconque des revendications précédentes.
